# EUROPEAN PATENT APPLICATION

(11) **EP 4 509 246 A1**
(43) Date of publication of application: **19.02.2025**
(21) Application number: 23803464.9
(22) Date of filing: 27.04.2023
(51) Int. Cl.: B22F 1/00, B22F 1/05, B22F 9/08, B22F 10/28, B22F 10/38, B22F 10/64, B33Y 10/00, B33Y 70/00, B33Y 80/00, C22C 9/01, C22F 1/00, C22F 1/08

(54) **COPPER ALLOY POWDER FOR ADDITIVE MANUFACTURING AND METHOD FOR PRODUCING SAID COPPER ALLOY POWDER, AND COPPER ALLOY ADDITIVELY-MANUFACTURED ARTICLE AND METHOD FOR PRODUCING SAME**

(30) Priority: 09.05.2022 JP 2022077233
(71) Applicant: Fukuda Metal Foil & Powder Co., Ltd., Kyoto 600-8435 (JP)
(72) Inventor: IMAI, Ken, Kyoto-shi, Kyoto 607-8305 (JP); SUGITANI, Yuji, Kyoto-shi, Kyoto 607-8305 (JP); MATSUMOTO, Seiichi, Kyoto-shi, Kyoto 607-8305 (JP)
(74) Representative: Betten & Resch
(86) International application number: PCT/JP2023/016612
(87) International publication number: WO 2023/218985

(57) **Abstract**

According to this invention, it is possible to obtain a high-quality copper alloy additively manufactured product. This present invention provides a copper alloy powder for additive manufacturing used to create an additively manufactured product by an additive manufacturing method, in which the copper alloy powder for additive manufacturing contains not less than 1.3 wt% to not more than 12.5 wt% of an aluminum element, and a balance is formed by copper and unavoidable impurities. A manufacturing method of a copper alloy powder for additive manufacturing includes generating a copper alloy powder formed by adding not less than 1.3 wt% to not more than 12.5 wt% of an aluminum element to copper by a gas atomization method, and classifying the generated copper alloy powder into a particle size of not less than 10 µm to not more than 45 µm. A manufacturing method of a copper alloy additively manufactured product includes manufacturing a copper alloy additively manufactured product by an additive manufacturing apparatus using a copper alloy powder for additive manufacturing, and holding the manufactured copper alloy additively manufactured product at not less than 400°C to not more than 600°C for 1 hr.

## Description

### TECHNICAL FIELD

The present invention relates to a copper alloy powder for additive manufacturing and a manufacturing method thereof, and a copper alloy additively manufactured product and a manufacturing method thereof.

### BACKGROUND ART

In the above technical field, the strength (hardness) and the electrical conductivity of a copper alloy additively manufactured product generally have a tradeoff relationship. Patent literatures 1 and 2 disclose a copper alloy powder for additive manufacturing, which contains 0.2 mass% or more to 1.3 mass% or less of aluminum and further contains copper and unavoidable impurities.

### CITATION LIST

### PATENT LITERATURE

Patent literature 1: Japanese Patent Laid-Open No. 2017-115220
Patent literature 2: Japanese Patent No. 6532396

### SUMMARY OF THE INVENTION

### TECHNICAL PROBLEM

However, it is impossible to obtain a high-quality copper alloy additively manufactured product using the copper alloy powder described in the above literatures.

The present invention enables to provide a technique of solving the above-described problem.

### SOLUTION TO PROBLEM

One example aspect of the present invention provides a copper alloy powder for additive manufacturing used to create an additively manufactured product by an additive manufacturing method,
wherein the copper alloy powder for additive manufacturing contains not less than 1.3 wt% to not more than 12.5 wt% of an aluminum element, and a balance is formed by copper and unavoidable impurities.

Another example aspect of the present invention provides a manufacturing method of the above-described copper alloy powder for additive manufacturing, comprising:
generating a copper alloy powder formed by adding not less than 1.3 wt% to not more than 12.5 wt% of an aluminum element to copper by a gas atomization method; and
classifying the generated copper alloy powder into a particle size of not less than 10 µm to not more than 45 µm.

Still other example aspect of the present invention provides a copper alloy additively manufactured product additively manufactured by an additive manufacturing apparatus using the above-described copper alloy powder for additive manufacturing,
wherein the copper alloy additively manufactured product contains not less than 1.3 wt% to not more than 12.5 wt% of an aluminum element, and a balance is formed by copper and unavoidable impurities.

Yet other example aspect of the present invention provides a copper alloy additively manufactured product additively manufactured by an additive manufacturing apparatus using the above-described copper alloy powder for additive manufacturing,
wherein the copper alloy additively manufactured product contains not less than 7.0 wt% to not more than 12.5 wt% of an aluminum element, and a balance is formed by copper and unavoidable impurities, and
a relative density is not less than 99.0%, a Vickers hardness is not less than 150 Hv, an engineering stress is not less than 500 MPa, a proof stress is not less than 180 MPa, and a wear amount is not more than 0.01 g.

Still other example aspect of the present invention provides a manufacturing method of a copper alloy additively manufactured product, comprising:
manufacturing a copper alloy additively manufactured product by an additive manufacturing apparatus using the above-described copper alloy powder for additive manufacturing; and
holding the manufactured copper alloy additively manufactured product at not less than 400°C to not more than 600°C for 1 hr.

### ADVANTAGEOUS EFFECTS OF INVENTION

According to the present invention, it is possible to obtain a high-quality copper alloy additively manufactured product.

### BRIEF DESCRIPTION OF DRAWINGS

Fig. 1 is a graph showing the relationship between the aluminum content of a copper alloy powder for additive manufacturing and the relative density, the electrical conductivity, and the engineering stress of a copper alloy additively manufactured product in patent literature 1;
Fig. 2 is a view showing an example of the configuration of an additive manufacturing apparatus used in the example;
Fig. 3 shows an optical microscope photograph showing a cross-sectional structure of a copper alloy additively manufactured product additively manufactured in Example 3 and a BC map and a KAM map captured by the SEM/EBSD method;

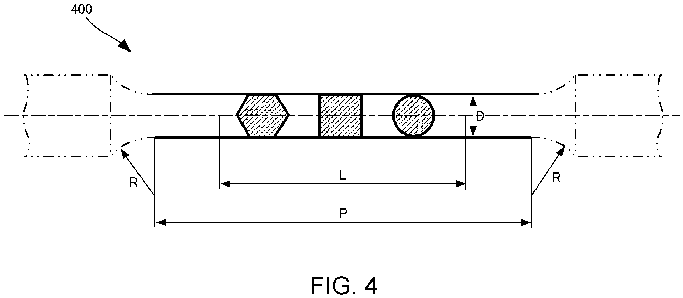

Fig. 4 is a view for explaining measurement of the engineering stress, the elongation, and the proof stress of a copper alloy additively manufactured product in each of Examples 1 to 8 and Comparative Examples 0 to 6;
Fig. 5 is a graph showing the relationship between the aluminum content of a copper alloy powder for additive manufacturing and the engineering stress and the proof stress of the copper alloy additively manufactured product obtained in each of Examples 1 to 8 and Comparative Examples 0 and 1;
Fig. 6 is a graph showing the relationship between the aluminum content of the copper alloy powder for additive manufacturing and the wear amount of the copper alloy additively manufactured product obtained in each of Examples 1 to 8 and Comparative Examples 0 and 1;
Fig. 7 shows a rapid cooling phase diagram of a Cu-Al alloy and calculation of a threshold;
Fig. 8 is a graph showing the relationship between the tempering temperature of the copper alloy additively manufactured product and the engineering stress and the proof stress of the copper alloy additively manufactured product obtained in Example 4; and
Fig. 9 is a view showing an equilibrium phase diagram of a Cu-Al alloy.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

In this example embodiment, a copper alloy powder for additive manufacturing, which can obtain a copper alloy additively manufactured product having a sufficient mechanical strength (an engineering stress, a proof stress, or a wear resistance), will be described. Before that, the current situation of copper alloy powders for additive manufacturing will be described.

### <Current Situation of Copper Alloy Powders for Additive Manufacturing>

An additive manufacturing technique enables to produce a product that has a complex shape and is difficult to manufacture by a conventional processing technique, and this technique is expected to be applied in various fields. In particular, application of metal materials excellent in a mechanical characteristic is demanded. In the metal materials, copper has a high electrical conductivity or thermal conductivity, and application of the additive manufacturing method to a product having a complex shape such as a heat sink or a heat exchanger is expected.

However, as in patent literatures 1 and 2, since a copper alloy powder capable of simultaneously improving the mechanical strength and the electrical conductivity is obtained, it is impossible to obtain a sufficient result concerning an engineering stress (maximum stress) or a proof stress (proof stress or 0.2% offset proof stress), which is the mechanical strength of an aluminum element containing copper alloy additively manufactured product, or a wear resistance (wear amount). For this reason, the application purposes of the copper alloy additively manufactured product are also limited.

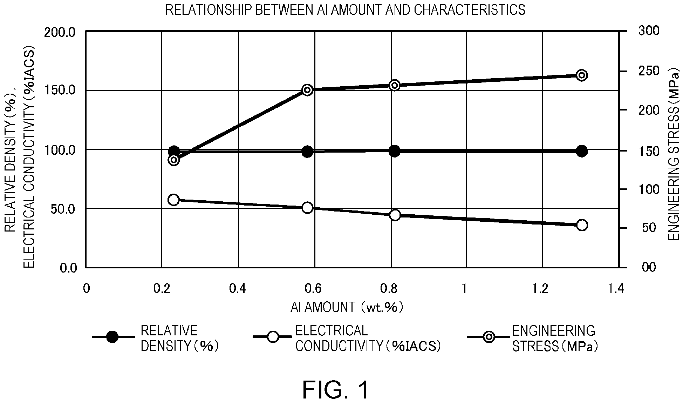

For example, the characteristics of the aluminum element containing copper alloy additively manufactured product in patent literatures 1 and 2 can be represented by a graph as shown in Fig. 1. That is, in patent literatures 1 and 2, a copper alloy additively manufactured product having a relative density of 96% or more to 100% or less, an electrical conductivity of 30%IACS or more, and an engineering stress (maximum stress) of 130 MPa or more to 250 MPa or less can be obtained using a copper alloy powder containing 0.2 mass% or more to 1.3 mass% or less of an aluminum element.

### <Copper Alloy Powder for Additive Manufacturing according to This Example Embodiment>

In this example embodiment, there is provided a copper alloy powder for additive manufacturing, which has a particle shape, a particle size, an apparent density, and a flow rate suitable for an additive manufacturing method by an additive manufacturing apparatus, and can additively manufacture a copper alloy additively manufactured product having an excellent engineering stress or proof stress that is a mechanical strength, or an excellent wear resistance.

### (Conditions of Copper Alloy Powder for Additive Manufacturing)

A copper alloy powder capable of additive manufacturing by an additive manufacturing apparatus needs to have the following conditions.
(1) The 50% particle size of copper alloy powder particles measured by a laser diffraction method falls within the range of 3 µm or more to 200 µm or less. If the 50% particle size of the copper alloy powder particles is smaller than 3 µm, no flow rate exists, and even an SLM type additive manufacturing apparatus cannot form a powder bed. On the other hand, if the 50% particle size of the copper alloy powder particles is larger than 200 µm, even an EBM type additive manufacturing apparatus cannot form a powder bed suitable for additive manufacturing because the surface of the powder bed roughens.
(2) The apparent density (AD) of the copper alloy powder is 3.0 g/cm³ or more. If the apparent density of the copper alloy powder is less than 3.0, the powder filling rate of the powder bed decreases in the additive manufacturing apparatus, and an appropriate powder bed cannot be formed.
(3) The flow rate (FR) of the copper alloy powder is 60 sec/50 g or less. If the flow rate of the copper alloy powder is 60 sec/50 g or more, the powder cannot be supplied from a supply hopper in the additive manufacturing apparatus, and an appropriate powder bed cannot be formed. Note that in a case where the flow rate (FR) cannot be measured, the adhesion (obtained from a failure envelope obtained by a shearing test executed using a powder rheometer) of the copper alloy powder is 0.600 kPa or less. If the adhesion of the copper alloy powder is 0.600 kPa or more, the powder cannot be supplied from a supply hopper in the additive manufacturing apparatus, and an appropriate powder bed cannot be formed.

### (Manufacturing Method of Copper Alloy Powder for Additive Manufacturing)

The copper alloy powder for additive manufacturing according to this example embodiment can be manufactured by, for example, a "rotating disc method", a "gas atomization method", a "water atomization method", a "plasma atomization method", a "plasma rotating electrode method", or the like. In this example embodiment, of these methods, the "gas atomization method" is used. A gas such as helium, argon, or nitrogen is used as an atomizing gas, and the pressure and the flow rate of the gas are adjusted, thereby manufacturing a copper alloy powder. A similar copper alloy powder can also be manufactured using another manufacturing method. The manufactured copper alloy powder was classified into a predetermined particle size (for example, 10 µm or more to 45 µm or less).

### (Measurement of Characteristics of Copper Alloy Powder for Additive Manufacturing)

Concerning the manufactured copper alloy powder for additive manufacturing, the following characteristics were measured.
(1) By ICP (Inductively Coupled Plasma) atomic emission spectroscopy, the content of an aluminum element in a copper alloy powder obtained by adding an aluminum element to copper was measured.
(2) The apparent density (g/cm³) of the copper alloy powder to which the aluminum element was added was measured in accordance with a measurement method of JIS Z 2504.
(3) The flow rate (sec/50 g) of the copper alloy powder to which the aluminum element was added was measured in accordance with a measurement method of JIS Z 2502.
(4) The adhesion of the copper alloy powder was measured as an index of the flow rate from a failure envelope obtained by a shearing test executed using a powder rheometer.
(5) The 50% particle size (µm) was measured by a laser diffraction method.

### (Evaluation of Measurement Results)

The copper alloy powder for additive manufacturing according to this example embodiment, to which an aluminum element was added 0.6 wt% or more to 14.0 wt% or less, satisfied the above-described conditions for enabling additive manufacturing by an additive manufacturing apparatus, although the flow rate measurement (3) was impossible. That is, the powder satisfied all (1) the 50% particle size of copper alloy powder particles, (2) the apparent density of the copper alloy powder, and (3) the adhesion of the copper alloy powder, although the flow rate itself could not be measured.

### <Manufacturing of Additively Manufactured Product of This Example Embodiment>

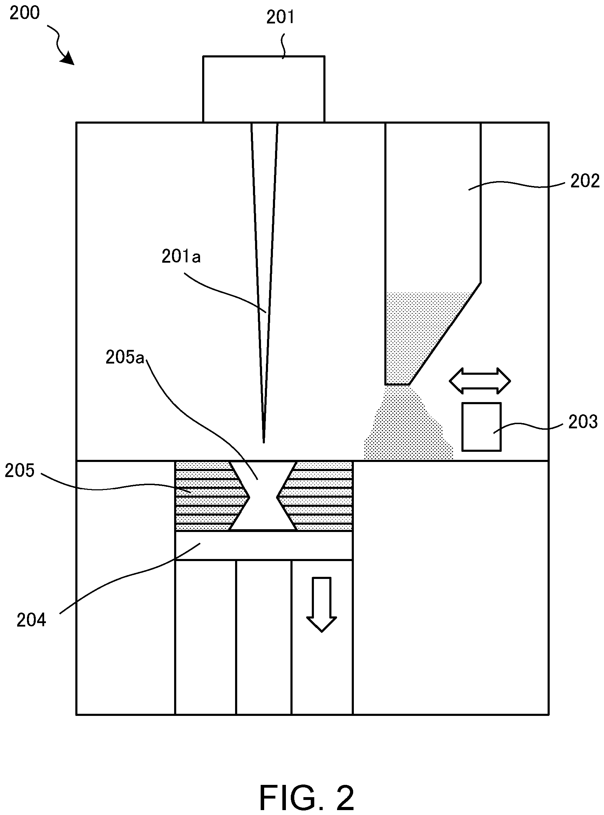

Fig. 2 is a view showing an example of the schematic configuration of an additive manufacturing apparatus 200 according to this example embodiment. The additive manufacturing apparatus 200 includes an emitting mechanism 201 of an electron beam or laser beam 201a, a hopper 202 that is a powder tank, a squeegeeing blade 203 configured to form a powder bed by laying a powder in a predetermined thickness, and a table 204 that repetitively decreases by a predetermined thickness for laminating. By cooperation of the squeegeeing blade 203 and the table 204, an even powder laminated portion 205 having a predetermined thickness is generated. Each layer is irradiated with the electron beam or laser beam 201a based on slice data obtained from 3D-CAD data, and a metal powder (a copper alloy powder in this example embodiment) is molten, thereby manufacturing an additively manufactured product 205a.

Note that a used energy density ED (J/mm³) was adjusted by ED = LP/(SS × HP × LT). Here, LP: laser output (W), SS: laser scan speed (mm/s), HP: laser scan pitch (mm), and LT: powder bed thickness (mm) (see Table 2).

### (Conditions of Additively Manufactured Product)

A useful additively manufactured product according to this example embodiment needs the following conditions. Note that the following conditions are conditions that a copper alloy additively manufactured product needs to obtain a desired mechanical strength.
(1) An additively manufactured product using a copper alloy powder has a sufficient relative density. For example, the relative density is 99.0% or more.
(2) The Vickers hardness of the additively manufactured product is 90.0 Hv or more, and preferably 150.0 Hv or more.
(3) The engineering stress of the additively manufactured product is 260.0 MPa or more, and preferably 500.0 MPa or more.
(4) The proof stress of the additively manufactured product is 160.0 MPa or more, and preferably 200.0 MPa or more.
(5) The wear amount of the additively manufactured product is 0.02 g or less, and preferably 0.01 g or less.

### (Measurement of Characteristics of Additively Manufactured Product)

Concerning the manufactured additively manufactured product, the following characteristics were measured.
(1) By an optical microscope and a SEM (Scanning Electron Microscope)/EBSD (Electron Back Scatter Diffraction) method, a cross-sectional structure, a BC (Band Contrast) map, and a KAM (Kernel Average Misorientation) map of the manufactured additively manufactured product were captured.
(2) The additively manufactured product and a powder having the same composition as the additively manufactured product were measured by the Archimedes method, and the relative density (%) of the additively manufactured product was calculated defining the density of the powder as 100%.
(3) The Vickers hardness (Hv) of the additively manufactured product was measured using a micro hardness tester.
(4) The engineering stress (MPa: maximum stress), the extension (%), and the proof stress (MPa) of the additively manufactured product were measured using a universal material testing machine.
(5) The wear amount (g) of the additively manufactured product was measured using a multifunction wear tester.
(6) The electrical conductivity (%IACS) of the additively manufactured product was measured using an eddy current conductivity meter.

### (Evaluation of Measurement Results)

By using a copper alloy powder for additive manufacturing according to this example embodiment, which contained 1.3 mass% or more to 12.5 mass% or less of an aluminum element, an additively manufactured product that satisfied the condition (1) relative density of 99.0% or more was manufactured. Also, an additively manufactured product that satisfied (2) Vickers hardness of 90.0 Hv or more was manufactured. In addition, an additively manufactured product that satisfied (3) engineering stress of 260.0 MPa or more and (4) proof stress of 160.0 MPa or more was manufactured. Furthermore, an additively manufactured product that satisfied (5) wear amount of 0.02 g or less was manufactured.

Furthermore, by using a copper alloy powder for additive manufacturing according to this example embodiment, which contained 7.0 mass% or more to 12.5 mass% or less of an aluminum element, a copper alloy additively manufactured product having a relative density of 99.0% or more, a Vickers hardness of 150.0 Hv or more, an engineering stress (maximum stress) of 500 MPa or more, a proof stress of 180 MPa or more, and a wear amount of 0.01 g or less can be obtained.

### (Composition of Suitable Copper Alloy Powder for Additive Manufacturing)

In this example embodiment, there is provided, by adding an appropriate amount of aluminum element to copper, a copper alloy powder which satisfies the conditions of a copper alloy powder for additive manufacturing for enabling squeegeeing and whose additively manufactured product after additive manufacturing by the additive manufacturing apparatus has a sufficient relative density and a sufficient mechanical strength as a machine product or a component.

As the copper alloy powder for additive manufacturing according to this example embodiment, a copper alloy powder for additive manufacturing, which contains 1.3 wt% or more to 12.5 wt% or less of the aluminum element and whose balance is formed by copper and unavoidable impurities, is preferable. A copper alloy powder for additive manufacturing containing 1.7 wt% or more to 12.5 wt% or less of an aluminum element is more preferable. A copper alloy powder for additive manufacturing containing 7.0 wt% or more to 12.5 wt% or less of an aluminum element is further preferable.

### <Effects of This Example Embodiment>

According to this example embodiment, a copper alloy powder for additive manufacturing to which 1.3 wt% or more to 12.5 wt% or less of an aluminum element was added was provided, and a copper alloy additively manufactured product having a high density and an excellent mechanical strength could be obtained.

That is, since the 50% particle size of the particles of the copper alloy powder measured by the laser diffraction method falls within the range of 3 µm or more to 200 µm or less, the surface of the powder bed does not roughen, and squeegeeing is easy because of a sufficient flow rate. Also, since the apparent density of the copper alloy powder is 3.5 g/cm³ or more, the powder filling rate of the powder bed is sufficient, and an appropriate powder bed can be formed. Additionally, since the adhesion of the copper alloy powder is 0.600 kPa or less, powder supply from the supply hopper can be performed smoothly, and an appropriate powder bed can be formed.

In addition, by adding 1.3 wt% or more to 12.5 wt% or less of an aluminum element, a copper alloy additively manufactured product whose relative density of the product created under the conditions set by the energy density calculated from the laser output, the laser scan speed, the laser scan pitch, and the powder bed thickness was 99.0% or more could be manufactured. Also, a copper alloy additively manufactured product having a Vickers hardness of 90 Hv or more, an engineering stress of 260 MPa or more, a proof stress of 160 MPa or more, and a wear amount of 0.02 g or less could be manufactured.

Also, by adding 7.0 wt% or more to 12.5 wt% or less of an aluminum element, a copper alloy additively manufactured product having a relative density of 99.0% or more, a Vickers hardness of 150 Hv or more, an engineering stress of 500 MPa or more, a proof stress of 180 MPa or more, and a wear amount of 0.01 g or less could be manufactured.

### [Second Example Embodiment]

In this example embodiment, a tempering treatment is further performed for the copper alloy additively manufactured product additively manufactured using the copper alloy powder for additive manufacturing according to the first example embodiment, thereby improving the mechanical strength, particularly, the proof stress. Note that manufacturing of the copper alloy powder for additive manufacturing and manufacturing of the copper alloy additively manufactured product using the copper alloy powder for additive manufacturing before the tempering treatment are the same as in the first example embodiment, and a repetitive description thereof will be omitted. Also, in this example embodiment, a copper alloy powder for additive manufacturing containing 10.0 wt% of an aluminum element will be described as an example. However, the same effects can be obtained even in a copper alloy additively manufactured product additively manufactured from other copper alloy powder for additive manufacturing containing aluminum element.

### <Tempering Treatment of Additively Manufactured Product of This Example Embodiment>

The copper alloy additively manufactured product additively manufactured using the copper alloy powder for additive manufacturing (aluminum element content: 10.0 wt%) according to the first example embodiment was held in a hydrogen atmosphere for 1 hr (60 min) while changing the temperature from 400°C to 600°C (400°C or more to 600°C or less), thereby performing the tempering treatment.

### (Effects of Tempering Treatment)

Along with the increase of the tempering temperature from 400°C to 600°C, the engineering stress linearly decreased from 894.98 MPa to 591.90 MPa, but the proof stress increased from 188.70 MPa or 253.60 MPa or more.

### <Effects of This Example Embodiment>

According to this example embodiment, by performing the tempering treatment for the copper alloy additively manufactured product, a copper alloy additively manufactured product difficult to be deformed by an external force because of the improved proof stress could be obtained.

### [Third Example Embodiment]

In this example embodiment, a copper alloy powder for additive manufacturing, which was obtained by further adding an iron element (Fe), a nickel element (Ni), and a manganese element (Mn) to the copper alloy powder for additive manufacturing according to the first example embodiment was manufactured. An additively manufactured product was created using the manufactured copper alloy powder for additive manufacturing.

The following influences are obtained by the addition of the iron element, the nickel element, and the manganese element.

### (Addition of Iron Element)

· In an α-phase solid solubility limit by addition of the iron element, the aluminum solid solubility limit of copper is affected a little.
· At a eutectoid transformation speed (β → α + γ₂), transformation in a low temperature portion is delayed.
· In a metal structure, a κ-phase (σ-Fe or Fe-Ni) is precipitated. The κ-phase tends to form a coarse precipitate phase like a dendrite along with an increase of the Fe addition amount. If about 3.5 wt% or more of Fe is contained, the κ-phase that is a primary crystal effectively makes the solidification structure of the β-phase finer.

### (Addition of Nickel Element)

· In an α-phase solid solubility limit by addition of the nickel element, the α-phase region is extended, and the stability of the β-phase decreases. Hence, eutectoid transformation is promoted.
· At a eutectoid transformation speed (β → α + γ₂), an effect of slightly promoting the start of eutectoid transformation but delaying the end of transformation is obtained.
· In a metal structure, a κ-phase (Ni-Al) is precipitated. By precipitating the κ-phase, an aging hardening property is imparted to aluminum bronze.

By the above processes (addition of the iron element) and (addition of the nickel element), the solidification structure is made finer, and an evenly dispersed κ-phase is obtained. This improves the "engineering stress (maximum stress)" and the "proof stress". In addition, the mechanical characteristic can easily be improved by a heat treatment and particularly, the "proof stress" can be improved.

### (Addition of Manganese Element)

· In an α-phase solid solubility limit by addition of the manganese element, there is no influence on the precipitation shapes of the α-phase and the κ-phase up to near 1 wt%. However, an increase of the manganese amount tends to narrow the α-phase region.
· At a eutectoid transformation speed (β → α + γ₂), eutectoid transformation is remarkably delayed. Also, the transformation temperature is remarkably decreased.
· In a metal structure, a Cu₃Mn₂Al phase is precipitated in the β-phase and the α-phase in a case of a high manganese composition.

By the above process (addition of the manganese element), eutectoid transformation of the β-phase is delayed. Hence, precipitation of a fragile γ₂-phase is impeded even in slow cooling. In addition, since the α-phase region is narrowed, the "engineering stress (maximum stress)", the "proof stress", and the "Vickers hardness" are improved along with an increase of the Mn amount.

The addition method of the iron element, the nickel element, and the manganese element in this example embodiment is the same as the aluminum element addition method according to the first example embodiment. In this example embodiment, a copper alloy powder for additive manufacturing containing 7.0 wt% or more to 12.5 wt% or less of an aluminum element, 1.0 wt% or more to 6.0 wt% or less of an iron element, 0.1 wt% or more to 6.0 wt% or less of a nickel element, and 0.1 wt% or more to 1.5 wt% or less of a manganese element was manufactured.

Concerning the manufactured copper alloy powder for additive manufacturing, the following characteristics were measured.
(1) By ICP (Inductively Coupled Plasma) atomic emission spectroscopy, the contents of the aluminum element, the iron element, the nickel element, and the manganese element in the manufactured copper alloy powder were measured.
(2) The apparent density (g/cm³) of the manufactured copper alloy powder was measured in accordance with a measurement method of JIS Z 2504.
(3) The flow rate (sec/50 g) of the manufactured copper alloy powder was measured in accordance with a measurement method of JIS Z 2502.
(4) The adhesion of the manufactured copper alloy powder was measured as an index of the flow rate from a failure envelope obtained by a shearing test executed using a powder rheometer.
(5) The 50% particle size (µm) of the manufactured copper alloy powder was measured by a laser diffraction method.

### (Evaluation of Measurement Results)

The copper alloy powder for additive manufacturing according to this example embodiment satisfied the above-described conditions for enabling additive manufacturing by an additive manufacturing apparatus, although the flow rate measurement (3) was impossible. That is, the powder satisfied all (1) the 50% particle size of copper alloy powder particles, (2) the apparent density of the copper alloy powder, and (3) the adhesion of the copper alloy powder, although the flow rate itself could be measured.

That is, the following conditions were satisfied, like the copper alloy powder for additive manufacturing according to the first example embodiment.
(1) The 50% particle size of copper alloy powder particles measured by a laser diffraction method falls within the range of 3 µm or more to 200 µm or less.
(2) The apparent density (AD) of the copper alloy powder is 3.0 g/cm³ or more.
(3) The flow rate (FR) of the copper alloy powder is 60 sec/50 g or less. Note that in a case where the flow rate (FR) cannot be measured, the adhesion (obtained from a failure envelope obtained by a shearing test executed using a powder rheometer) of the copper alloy powder is 0.600 kPa or less.

Next, an additively manufactured product was created using a copper alloy powder for additive manufacturing manufactured by an additive manufacturing apparatus 200 shown in Fig. 2, as in the first example embodiment. Note that a used energy density ED (J/mm³) was adjusted by ED = LP/(SS × HP × LT). Here, LP: laser output (W), SS: laser scan speed (mm/s), HP: laser scan pitch (mm), and LT: powder bed thickness (mm) (see Table 9).

Concerning the additively manufactured product, the following characteristics were measured.
(1) By an optical microscope and a SEM (Scanning Electron Microscope)/EBSD (Electron Back Scatter Diffraction) method, a cross-sectional structure, a BC (Band Contrast) map, and a KAM (Kernel Average Misorientation) map of the manufactured additively manufactured product were captured.
(2) The additively manufactured product and a powder having the same composition as the additively manufactured product were measured by the Archimedes method, and the relative density (%) of the additively manufactured product was calculated defining the density of the powder as 100%.
(3) The Vickers hardness (Hv) of the additively manufactured product was measured using a micro hardness tester.
(4) The engineering stress (MPa: maximum stress), the elongation (%), and the proof stress (MPa) of the additively manufactured product were measured using a universal material testing machine.
(5) The wear amount (g) of the additively manufactured product was measured using a multifunction wear tester.
(6) The electrical conductivity (%IACS) of the additively manufactured product was measured using an eddy current conductivity meter.

### (Evaluation of Measurement Results)

By using a copper alloy powder for additive manufacturing according to this example embodiment, which contains 7.0 mass% or more to 12.5 mass% or less of an aluminum element, 1.0 wt% to more to 6.0 wt% or less of an iron element, 0.1 wt% or more to 6.0 wt% or less of a nickel element, and 0.1 wt% or more to 1.5 wt% or less of a manganese element, a copper alloy additively manufactured product having a relative density of 99.0% or more, a Vickers hardness of 150.0 Hv or more, an engineering stress (maximum stress) of 500 MPa or more, a proof stress of 180 MPa or more, and a wear amount of 0.01 g or less can be obtained.

### <Effects of This Example Embodiment>

According to this example embodiment, a copper alloy powder for additive manufacturing to which 7.0 mass% or more to 12.5 mass% or less of an aluminum element, 1.0 wt% to more to 6.0 wt% or less of an iron element, 0.1 wt% or more to 6.0 wt% or less of a nickel element, and 0.1 wt% or more to 1.5 wt% or less of a manganese element were added was provided, and a copper alloy additively manufactured product having a high density and an excellent mechanical strength could be obtained.

That is, since the 50% particle size of the particles of the copper alloy powder measured by the laser diffraction method falls within the range of 3 µm or more to 200 µm or less, the surface of the powder bed does not roughen, and squeegeeing is easy because of a sufficient flow rate. Also, since the apparent density of the copper alloy powder is 3.5 g/cm³ or more, the powder filling rate of the powder bed is sufficient, and an appropriate powder bed can be formed. Additionally, since the adhesion of the copper alloy powder is 0.600 kPa or less, powder supply from the supply hopper can be performed smoothly, and an appropriate powder bed can be formed.

In addition, by adding 7.0 mass% or more to 12.5 mass% or less of an aluminum element, 1.0 wt% to more to 6.0 wt% or less of an iron element, 0.1 wt% or more to 6.0 wt% or less of a nickel element, and 0.1 wt% or more to 1.5 wt% or less of a manganese element, a copper alloy additively manufactured product whose relative density of the product created under the conditions set by the energy density calculated from the laser output, the laser scan speed, the laser scan pitch, and the powder bed thickness was 99.0% or more, and which had a Vickers hardness of 150 Hv or more, an engineering stress of 500 MPa or more, a proof stress of 180 MPa or more, and a wear amount of 0.01 g or less could be manufactured.

### [Examples]

Examples 1 to 5 and Comparative Examples 0 to 5 according to the first example embodiment will be described below.

### <Manufacturing of Copper Alloy Powder for Additive Manufacturing>

A copper alloy powder to which an aluminum element was added was manufactured by a gas atomization method. Helium, argon, or nitrogen was used as an atomizing gas, and the pressure and the flow rate of the gas were adjusted, thereby manufacturing a copper alloy powder to which the aluminum element was added.

Copper alloy powders were manufactured while changing the content of the aluminum element after addition to 0.6 wt% (Comparative Example 0), 1.3 wt% (Comparative Example 1), 2.0 wt% (Example 1), 5.0 wt% (Example 2), 7.0 wt% (Example 3), 10.0 wt% (Example 4), 12.0 wt% (Example 5), and 14.0 wt% (Comparative Example 2).

These were compared with a copper fine powder using a high-pressure water atomization method (Comparative Example 3), a copper spherical powder using a plasma rotating electrode method (Comparative Example 4), and a copper powder using a gas atomization method (Comparative Example 5).

### (Measurement of Characteristics of Copper Alloy Powder for Additive Manufacturing)

By ICP atomic emission spectroscopy, the content of the aluminum element in each copper alloy powder to which the aluminum element was added was measured. Also, the apparent density (g/cm³) of the copper alloy powder to which the aluminum element was added was measured in accordance with JIS Z 2504. The flow rate (sec/50 g) of the copper alloy powder to which the aluminum element was added was measured in accordance with JIS Z 2502. The 50% particle size (µm) was measured by a laser diffraction method (Microtrac MT3300: available from MicrotracBEL). Table 1 shows the characteristics of the manufactured copper alloy powders according to Examples 1 to 5 and Comparative Examples 0, 1, and 2. A shearing test was conducted using Powder Rheometer FT4 (available from Freeman Technology), and the adhesion (kPa) of each obtained copper alloy powder was measured. In addition, it was determined whether each powder was a copper alloy powder that enabled squeegeeing, using a jig called a doctor blade or applicator, which is a jig formed by processing one surface of a metal block to form a gap and capable of applying paint or ink in a predetermined film thickness.

Table 1 shows the characteristics of the manufactured copper alloy powders in Examples 1 to 5 and Comparative Examples 0, 1, and 2 and copper powders in Comparative Examples 3 to 5.

**Table 1]**

| | Composition | | Powder characteristics | | | | Squeegeeing possibility |
|---|---|---|---|---|---|---|---|
| | Element content (wt%) | | AD | FR | D50 | Adhesion | |
| | Cu | Al | (g/cm³) | (sec/50g) | (µm) | (kPa) | |
| Comparative Example 0 | Bal. | 0.6 | 5.12 | none. | 25.3 | 0.48 | ○ |
| Comparative Example 1 | Bal. | 1.3 | 5.06 | none. | 25.3 | 0.38 | ○ |
| Example 1 | Bal. | 2.0 | 4.99 | none. | 25.3 | 0.56 | ○ |
| Example 2 | Bal. | 5.0 | 4.72 | none. | 25.8 | 0.52 | ○ |
| Example 3 | Bal. | 7.0 | 4.55 | none. | 24.1 | 0.33 | ○ |
| Example 4 | Bal. | 10.0 | 4.35 | none. | 25.6 | 0.56 | ○ |
| Example 5 | Bal. | 12.0 | 4.16 | none. | 25.2 | 0.32 | ○ |
| Comparative Example 2 | Bal. | 14.0 | 3.95 | none. | 25.5 | 0.57 | ○ |
| Comparative Example 3 | Bal. | - | 2.72 | none. | 2.9 | 1.17 | × |
| Comparative Example 4 | Bal. | - | 5.22 | 10.4 | 210.0 | | × |
| Comparative Example 5 | Bal. | - | 3.44 | none. | 16.0 | 0.47 | × |

### (Characteristic Evaluation of Copper Alloy Powder for Additive Manufacturing)

According to Table 1, the copper alloy powders for additive manufacturing according to Examples 1 to 5 and Comparative Examples 0, 1, and 2 satisfied the above-described conditions for enabling additive manufacturing by an additive manufacturing apparatus. That is, each powder satisfied (1) the 50% particle size (D50 in Table 1) of powder particles and (2) the apparent density (AD in Table 1) of the powder, and also satisfied (3) the adhesion, although the flow rate (FR) of the powders could not be measured (none.) (Examples 1 to 5 and Comparative Examples 0, 1, and 2), and squeegeeing was possible. On the other hand, squeegeeing was impossible with the powders (Comparative Examples 3 to 5) that did not satisfy any one of the conditions.

### <Manufacturing of Additively Manufactured Product>

Using the copper alloy powder for additive manufacturing in each of Examples 1 to 5 and Comparative Examples 0, 1, and 2, with which squeegeeing was possible, an additively manufactured product was manufactured using a 3D additive manufacturing apparatus (powder sintering additive manufacturing/SLM: SLM280HL available from SLM Solutions). Note that as a sample of an additively manufactured product for characteristic measurement, an additively manufactured product with a rectangular parallelepiped shape having a width of 10 mm × a depth of 7 mm × a height of 5 mm was manufactured.

Using the copper alloy powder in each of Examples 1 to 5 and Comparative Examples 0, 1, and 2, an additively manufactured product was manufactured using an appropriate energy density (J/mm³). Table 2 shows the energy density (J/mm³). Note that for a copper alloy powder for additive manufacturing to which 14.0 wt% of an aluminum element was added and in which cracks occurred at the time of additive manufacturing, an additively manufactured product was manufactured while changing the energy density (J/mm³) (see Comparative Examples 2-1 to 2-21).

**[Table 2]**

| | Composition | | Sha | | ping conditions | | | Squeegeeing possibility | Shaping effect |
|---|---|---|---|---|---|---|---|---|---|
| | Element content (wt%) | | LP | SS | HP | LT | ED | | |
| | Cu | Al | (W) | (mm/s) | (mm) | (mm) | (J/mm³) | | |
| Comparative Example 0 | Bal. | 0.6 | 600 | 550 | 0.08 | 0.05 | 272.7 | ○ | ○ |
| Comparative Example 1 | Bal. | 1.3 | 600 | 650 | 0.08 | 0.05 | 230.8 | ○ | ○ |
| Example 1 | Bal. | 2.0 | 450 | 600 | 0.08 | 0.05 | 187.5 | ○ | ○ |
| Example 2 | Bal. | 5.0 | 400 | 900 | 0.08 | 0.05 | 111.1 | ○ | ○ |
| Example 3 | Bal. | 7.0 | 400 | 1250 | 0.09 | 0.06 | 59.3 | ○ | ○ |
| Example 4 | Bal. | 10.0 | 400 | 1250 | 0.09 | 0.06 | 59.3 | ○ | ○ |
| Example 5 | Bal. | 12.0 | 400 | 1250 | 0.06 | 0.04 | 133.3 | ○ | ○ |
| Comparative Example 2 | Bal. | 14.0 | 200 - 300 | 500 - 1500 | 0.08 - 0.15 | 0.03 - 0.06 | 34.9 - 113.6 | ○ | × |
| Comparative Example 2-1 | Bal. | 14.0 | 200 | 1100 | 0.08 | 0.03 | 75.8 | ○ | × |
| Comparative Example 2-2 | Bal. | 14.0 | 200 | 1200 | 0.08 | 0.03 | 69.4 | ○ | × |
| Comparative Example 2-3 | Bal. | 14.0 | 200 | 1300 | 0.08 | 0.03 | 64.1 | ○ | × |
| Comparative Example 2-4 | Bal. | 14.0 | 200 | 1400 | 0.08 | 0.03 | 59.5 | ○ | × |
| Comparative Example 2-5 | Bal. | 14.0 | 200 | 1500 | 0.08 | 0.03 | 55.6 | ○ | × |
| Comparative Example 2-6 | Bal. | 14.0 | 250 | 1100 | 0.08 | 0.03 | 94.7 | ○ | × |
| Comparative Example 2-7 | Bal. | 14.0 | 250 | 1200 | 0.08 | 0.03 | 86.8 | ○ | × |
| Comparative Example 2-8 | Bal. | 14.0 | 250 | 1300 | 0.08 | 0.03 | 80.1 | ○ | × |
| Comparative Example 2-9 | Bal. | 14.0 | 250 | 1400 | 0.08 | 0.03 | 74.4 | ○ | × |
| Comparative Example 2-10 | Bal. | 14.0 | 250 | 1500 | 0.08 | 0.03 | 69.4 | ○ | × |
| Comparative Example 2-11 | Bal. | 14.0 | 300 | 1100 | 0.08 | 0.03 | 113.6 | ○ | × |
| Comparative Example 2-12 | Bal. | 14.0 | 300 | 1200 | 0.08 | 0.03 | 104.2 | ○ | × |
| Comparative Example 2-13 | Bal. | 14.0 | 300 | 1300 | 0.08 | 0.03 | 96.2 | ○ | × |
| Comparative Example 2-14 | Bal. | 14.0 | 300 | 1400 | 0.08 | 0.03 | 89.3 | ○ | × |
| Comparative Example 2-15 | Bal. | 14.0 | 300 | 1500 | 0.08 | 0.03 | 83.3 | ○ | × |
| Comparative Example 2-16 | Bal. | 14.0 | 220 | 500 | 0.15 | 0.06 | 48.9 | ○ | × |
| Comparative Example 2-17 | Bal. | 14.0 | 220 | 700 | 0.15 | 0.06 | 34.9 | ○ | × |
| Comparative Example 2-18 | Bal. | 14.0 | 240 | 500 | 0.15 | 0.06 | 53.3 | ○ | × |
| Comparative Example 2-19 | Bal. | 14.0 | 240 | 700 | 0.15 | 0.06 | 38.1 | ○ | × |
| Comparative Example 2-20 | Bal. | 14.0 | 260 | 500 | 0.15 | 0.06 | 57.8 | ○ | × |
| Comparative Example 2-21 | Bal. | 14.0 | 260 | 700 | 0.15 | 0.06 | 41.3 | ○ | × |

As indicated by Comparative Examples 2-1 to 2-21 in Table 2, cracks occurred in each copper alloy powder for additive manufacturing to which 14.0 wt% of an aluminum element was added even if the energy density was changed.

### (Characteristic Measurement of Copper Alloy Additively Manufactured Product)

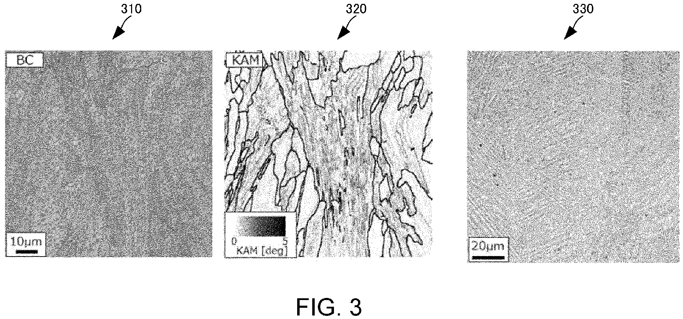

By an optical microscope and a SEM (Scanning Electron Microscope)/EBSD (Electron Back Scatter Diffraction) method, a cross-sectional structure, a BC (Band Contrast) map, and a KAM (Kernel Average Misorientation) map of each manufactured copper alloy additively manufactured product were captured. Fig. 3 shows a BC map 310 and a KAM map 320 of a copper alloy additively manufactured product to which 7.0 wt% of an aluminum element was added, which were obtained by EBSD, and an optical microscope photograph 330 of a copper alloy additively manufactured product to which 10.0 wt% of an aluminum element was added.

In addition, the characteristics of each manufactured copper alloy additively manufactured product were measured by testing apparatuses shown in Table 3.

**[Table 3]**

| Test items | Maker | Apparatus | Model | Conditions | |
|---|---|---|---|---|---|
| Electric conductivity | NIHON MATECH CORPORATION | SigmaCheck2 | | electrical conductivity defined based on electrical conductivity of standard soft annealed copper as 100%IACS | |
| Vickers hardness | SHIMADZU CORPORATION | micro hardness tester | HMV-G21-DT | test force: HV0.025 (245.2 mN) | |
| | | | | holding time: 10 sec | |
| Engineering stress | ORIENTEC CO., LTD. | universal material testing machine | UCT-25T | test piece shape: | test piece |
| | | | | JIS14A | size |
| Elongation | | | | diameter: φ6mm | L: 30 mm |
| | | | | gauge length: 50 mm | P: 50 |
| | | | | test speed: 10 | R: 15 |
| | | | | mm/min→ until braking | |
| Proof stress | | | | engineering stress calculation: | D: 6 |
| | | | | P(N)/A(mm²) | |
| | | | | P: breaking load (N), | |
| | | | | A: πD²/4 (mm²) | |
| Wear amount | BRUKER | multifunction wear tester | UMT Tribo Lab | testing method: ball on disk method(dry) | |
| | | | | test oil: none | |
| | | | | ball material: SUJ2 (high carbon chromium bearing steel) | |
| | | | | rotation speed: 200 rpm | |
| | | | | pressing load: 10 N | |
| | | | | operation time: 30 min | |
| | | | | atmosphere: atmospheric air | |
| Tempering | KOYO THERMO SYSTEMS CO., LTD. | atmospheric tube furnace | ICTF045N-AS | temperature: 500°C | |
| | | | | time: 60 min | |
| | | | | atmosphere: hydrogen | |

| | | | | | |
|---|---|---|---|---|---|
| Note that a test piece size 400 in the measurement of the engineering stress, the elongation, and the proof stress is shown in Fig. 4. | | | | | |

Table 4 shows the characteristics of the copper alloy additively manufactured products measured by the testing apparatuses shown in Table 3.

**Table 4]**

| | Composition | | Squeegeeing possibility | Production method | Additively manufactured product characteristics | | | | | | |
|---|---|---|---|---|---|---|---|---|---|---|---|
| | Element content (wt%) | | | | Relative density % | Vickers hardness Hv | Maximum stress MPa | Elongation % | Proof stress MPa | Wear amount g | Electrical conductivity %IACS |
| | Cu | Al | | | | | | | | | |
| Comparative Example 0 | Bal. | 0.6 | ○ | AM | 99.6 | 84.8 | 233.83 | 46.8% | 153.80 | 0.0189 | 49.7% |
| Comparative Example 1 | Bal. | 1.3 | ○ | AM | 99.8 | 83.3 | 254.39 | 42.4% | 150.39 | 0.0415 | 34.7% |
| Example 1 | Bal. | 2.0 | ○ | AM | 99.9 | 94.9 | 270.02 | 40.4% | 167.22 | 0.0135 | 27.8% |
| Example 2 | Bal. | 5.0 | ○ | AM | 99.9 | 136.2 | 413.71 | 57.0% | 179.48 | 0.0121 | 18.0% |
| Example 3 | Bal. | 7.0 | ○ | AM | 99.7 | 164.2 | 501.33 | 49.0% | 239.25 | 0.0095 | 16.2% |
| Example 4 | Bal. | 10.0 | ○ | AM | 99.9 | 342.9 | 894.98 | 10.8% | 188.70 | 0.0031 | 12.5% |
| Example 5 | Bal. | 12.0 | ○ | AM | 99.8 | 241.7 | 690.53 | 13.5% | 201.70 | 0.0028 | 20.8% |
| Comparative Example 2 | Bal. | 14.0 | ○ | Shaping was impossible because of cracks at the time of shaping | | | | | | | |

### (Characteristic Evaluation of Copper Alloy Additively Manufactured Product)

As is apparent from the BC map 310 and the KAM map 320 shown in Fig. 3, very fine columnar crystals having a width of about 1 µm or less are growing in the laminating direction, and high strain regions are distributed along the crystals. It is considered that generation of such a fine structure and strains is derived from a rapid cooling solidification process in the additive manufacturing method. It is assumed that this contributes particularly to an increase of the proof stress in an additively manufactured product to which 7.0 wt% of an aluminum element is added.

On the other hand, an additively manufactured product to which 10.0 wt% of an aluminum element was added exhibited very large work hardening, and its engineering stress also exhibited a very high value. Reversely, the proof stress did not greatly increase. As is apparent from structure observation based on the optical microscope photograph 330 and an XRD analysis result based on the optical microscope photograph 330, the copper alloy additively manufactured product exhibits a plate-shaped β'-martensite structure. It is considered that the proof stress does not increase as compared to the large work hardening or engineering stress because of the martensitic transformation caused by the rapid solidification process at the time of additive manufacturing.

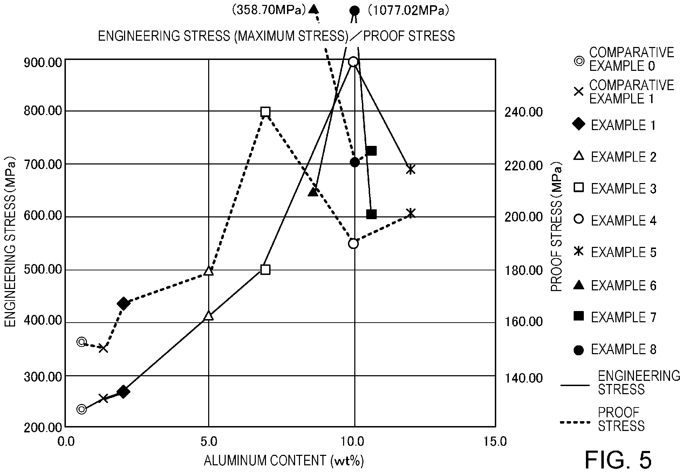

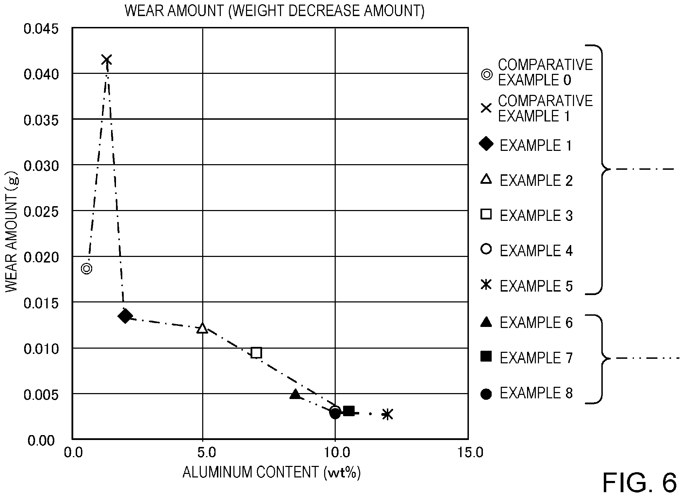

Also, Fig. 5 is a graph showing the relationship between the aluminum content of the copper alloy powder for additive manufacturing and the engineering stress and the proof stress of the copper alloy additively manufactured product based on the characteristic measurement result shown in Table 4 obtained in each of Examples 1 to 5 and Comparative Examples 0 and 1. Fig. 6 is a graph showing the relationship between the aluminum content of the copper alloy powder for additive manufacturing and the wear amount of the copper alloy additively manufactured product based on the characteristic measurement result shown in Table 4 obtained in each of Examples 1 to 5 and Comparative Examples 0 and 1.

As can be seen from the measurement result of the characteristic of the copper alloy additively manufactured product shown in Table 4 and the graphs of Figs. 5 and 6, the mechanical strength of the copper alloy additively manufactured product additively manufactured from the copper alloy powder for additive manufacturing containing 1.3 wt% or more to 12.5 wt% or less of an aluminum element is very high. That is, a copper alloy additively manufactured product that satisfied a Vickers hardness of 90.0 Hv or more, an engineering stress (maximum stress) of 260 MPa or more, a proof stress of 160 MPa or more, and a wear amount of 0.02 g or less could be additively manufactured.

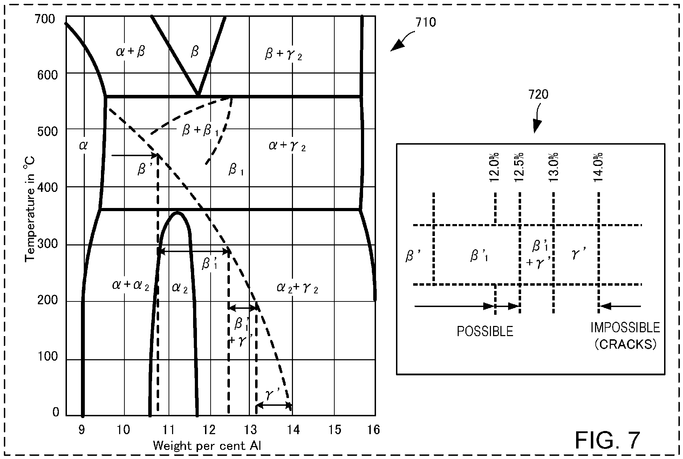

Note that the upper limit value of the aluminum content, 12.5 wt%, was calculated as in the following way. Fig. 7 shows a rapid cooling phase diagram of a Cu-Al alloy and calculation of a threshold. As shown in Table 4, additive manufacturing was possible until an aluminum element content of 12.0 wt%. When the aluminum element content was 14.0 wt%, cracks occurred at the time of additive manufacturing, and additive manufacturing was impossible. Here, in a rapid cooling phase diagram (710) of a Cu-Al alloy shown in Fig. 7, a solid line indicates an equilibrium phase diagram. If the cooling process includes rapid cooling, a phase diagram indicated by a broken line is obtained. Since additive manufacturing includes rapid cooling in the cooling process, a constituting phase of the phase diagram indicated by the broken line is obtained. Referring to a view (720) showing calculation of a threshold shown in Fig. 7, based on the rapid cooling phase diagram (710), an additively manufactured product is formed in a β1'-phase if the aluminum element content is 12.5 wt% or less. However, if the aluminum element content exceeds 12.5 wt%, a y'-phase starts being precipitated. If the aluminum element content is 14.0 wt%, y'-single-phase is substantially obtained. For this reason, cracks at the time of additive manufacturing is probably caused by precipitation of the y'-phase, and it is assumed that if the aluminum element content falls within the range of 12.5 wt% or less, in which the y'-phase is not precipitated, additive manufacturing can be performed without causing cracks.

Performing proportional calculation based on the result of an aluminum element content of 1.3 wt% and the result of an aluminum element content of 2.0 wt%, it is assumed that if the aluminum element content is 1.7 wt% or more, a copper alloy additively manufactured product that satisfies a Vickers hardness of 90.0 Hv or more, an engineering stress (maximum stress) of 260 MPa or more, a proof stress of 160 MPa or more, and a wear amount of 0.02 g or less can be additively manufactured.

As can be seen from the measurement result of the characteristic of the copper alloy additively manufactured product shown in Table 4 and the graphs of Figs. 5 and 6, the mechanical strength of the copper alloy additively manufactured product additively manufactured from the copper alloy powder for additive manufacturing containing 7.0 wt% or more to 12.5 wt% or less of an aluminum element is higher. That is, a copper alloy additively manufactured product that satisfied a Vickers hardness of 150.0 Hv or more, an engineering stress (maximum stress) of 500 MPa or more, a proof stress of 180 MPa or more, and a wear amount of 0.01 g or less could be additively manufactured.

Table 5 shows a set of thresholds for evaluating the mechanical strength of a copper alloy additively manufactured product, which are set based on Examples 1 to 5. Note that "≥ numerical value" indicates "not less than the numerical value", and "numerical value ≥" indicates "not more than the numerical value".

**[Table 5]**

| | Vickers hardness (Hv) | Engineering stress (MPa) | Proof stress (MPa) | Wear amount (g) |
|---|---|---|---|---|
| First threshold set | ≥ 90.0 | ≥ 260 | ≥ 160 | 0.02 ≥ |
| Second threshold set | ≥ 150.0 | ≥ 500 | ≥ 180 | 0.01 ≥ |

### <Tempering Treatment of Copper Alloy Additively Manufactured Product>

The additively manufactured product to which 10.0 wt% of an aluminum element was added exhibited very large work hardening, and its engineering stress also exhibited a very high value. Reversely, the proof stress did not greatly increase. It is considered that this occurs because the additively manufactured product exhibits a plate-shaped β'-martensite structure, and martensitic transformation is caused by the rapid cooling solidification process at the time of additive manufacturing. Hence, according to the second example embodiment, tempering was performed at 400°C, 500°C, and 600°C for 1 hr, and characteristics associated with the mechanical strength were then measured.

Table 6 shows the measurement result of the characteristics associated with the mechanical strength after the tempering treatment was performed for additively manufactured products to which an aluminum element was added 10.0 wt% and 12.0 wt%.

**Table 6]**

| | Composition | | Without heat treatment | | | Tempering (400°C × 60 min) | | | Tempering (500°C × 60 min) | | | Tempering (600°C × 60 min) | | |
|---|---|---|---|---|---|---|---|---|---|---|---|---|---|---|
| | Element content (wt%) | | Maximum stress MPa | Proof stress MPa | Wear amount g | Maximum stress MPa | Proof stress MPa | Wear amount g | Maximum stress MPa | Proof stress MPa | Wear amount g | Maximum stress MPa | Proof stress MPa | Wear amount g |
| | Cu | Al | | | | | | | | | | | | |
| Example 4 | Bal. | 10.0 | 894.98 | 188.70 | 0.0031 | 757.38 | 206.80 | 0.0031 | 661.44 | 253.60 | 0.0028 | 591.90 | 233.16 | 0.0028 |
| Example 5 | Bal. | 12.0 | 690.53 | 201.70 | 0.0028 | 659.38 | 198.70 | 0.0019 | 782.11 | 243.23 | 0.0035 | 681.88 | 275.76 | 0.0016 |

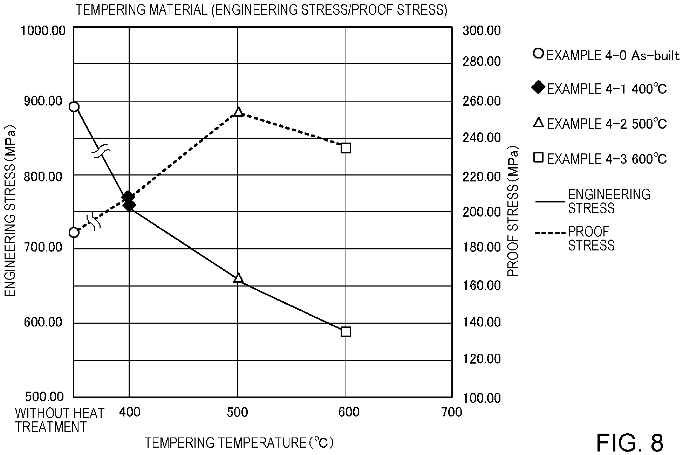

Fig. 8 is a graph of the measurement result of the engineering stress and the proof stress with respect to the tempering temperature.

### (Evaluation of Tempering Treatment)

When the copper alloy additively manufactured product was tempered at a temperature slightly lower than a β-eutectoid decomposition temperature, the engineering stress decreased along with the increase of the temperature but maintained 500 MPa or more (about 600 MPa), and the proof stress increased. This result suggests that the structure of the copper alloy additively manufactured product is fine.

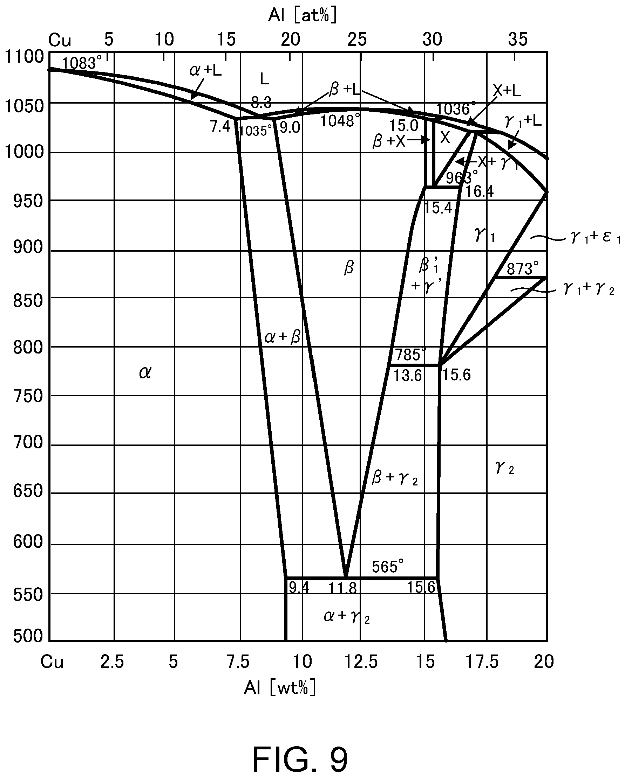

Fig. 9 shows an equilibrium phase diagram of a Cu-Al alloy. From the equilibrium phase diagram of Fig. 9, an α-phase single phase structure is exhibited at an aluminum element content of 9.0 wt% or less. At an aluminum element content of 9.4 to 15.6 wt%, a eutectoid phase formed by (α + γ₂) appears. In the (α + γ₂) region, the β-phase that is a high-temperature stable phase is rapidly cooled, thereby exhibiting a β'-phase at an aluminum element content of 10.0 wt%, and a β1'-phase at an aluminum element content of 12.0 wt%. Note that each of the β'-phase and the β1'-phase is a martensite structure.

As described above, since many movable dislocations are introduced at the time of martensitic transformation, movement starts at a low stress level, and a plastic strain according to the number of moved dislocations occurs. As a result, the proof stress decreases, and the movement of the movable dislocations is reflected. When the copper alloy additively manufactured product containing 10.0 wt% of an aluminum element was tempered, the movable dislocations in the copper alloy additively manufactured product decreased, and therefore, the proof stress increased. It is assumed from this fact that the same effect could be obtained even at an aluminum element content of 12.0 wt% at which the same martensite structure was exhibited.

Examples 6 to 8 and Comparative Example 6 according to the third example embodiment will be described below.

### <Manufacturing of Copper Alloy Powder for Additive Manufacturing>

A copper alloy powder to which an aluminum element, an iron element, a nickel element, and a manganese element were added was manufactured by a gas atomization method. Helium, argon, or nitrogen was used as an atomizing gas, and the pressure and the flow rate of the gas were adjusted, thereby manufacturing a copper alloy powder to which the aluminum element, the iron element, the nickel element, and the manganese element were added.

Copper alloy powders were manufactured while changing the content of the aluminum element after addition to 8.5 wt%, the content of the iron element to 3.0 wt%, the content of the nickel element to 0.5 wt%, and the content of the manganese element to 0.1 wt% (Example 6), the content of the aluminum element to 10.5 wt%, the content of the iron element to 3.1 wt%, the content of the nickel element to 2.0 wt%, and the content of the manganese element to 1.1 wt% (Example 7), the content of the aluminum element to 10.0 wt%, the content of the iron element to 5.0 wt%, the content of the nickel element to 5.0 wt%, and the content of the manganese element to 0.7 wt% (Example 8), and the content of the aluminum element to 9.0 wt%, the content of the iron element to 3.5 wt%, the content of the nickel element to 2.5 wt%, and the content of the manganese element to 11.0 wt% (Comparative Example 6).

### (Measurement of Characteristics of Copper Alloy Powder for Additive Manufacturing)

By ICP atomic emission spectroscopy, the content of each element in the copper alloy powders according to Examples 6 to 8 and Comparative Example 6 was measured. Also, the apparent density (g/cm³) of each of the copper alloy powders according to Examples 6 to 8 and Comparative Example 6 was measured in accordance with JIS Z 2504. The flow rate (sec/50 g) of each of the copper alloy powders according to Examples 6 to 8 and Comparative Example 6 was measured in accordance with JIS Z 2502. The 50% particle size (µm) was measured by a laser diffraction method (Microtrac MT3300: available from MicrotracBEL). Table 7 shows the characteristics of the manufactured copper alloy powders according to Examples 6 to 8 and Comparative Example 6. A shearing test was conducted using Powder Rheometer FT4 (available from Freeman Technology), and the adhesion (kPa) of each obtained copper alloy powder was measured. In addition, it was determined whether each powder was a copper alloy powder that enabled squeegeeing, using a jig called a doctor blade or applicator, which is a jig formed by processing one surface of a metal block to form a gap and capable of applying paint or ink in a predetermined film thickness.

Table 7 shows the characteristics of the manufactured copper alloy powders in Examples 6 to 8 and Comparative Example 6.

**[Table 7]**

| | Composition | | | | | Powder characteristics | | | | Squeegeeing possibility |
|---|---|---|---|---|---|---|---|---|---|---|
| | Element content (wt%) | | | | | AD | FR | D50 | Adhesion | |
| | Cu | Al | Fe | Ni | Mn | (g/cm³) | (sec/50g) | (µm) | (kPa) | |
| Example 6 | Bal. | 8.5 | 3.0 | 0.5 | 0.1 | 4.28 | none. | 28.8 | 0.45 | ○ |
| Example 7 | Bal. | 10.5 | 3.1 | 2.0 | 1.1 | 4.34 | none. | 25.6 | 0.37 | ○ |
| Example 8 | Bal. | 10.0 | 5.0 | 5.0 | 0.7 | 4.15 | none. | 28.6 | 0.54 | ○ |
| Comparative Example 6 | Bal. | 9.0 | 3.5 | 2.5 | 11.0 | 4.22 | none. | 27.7 | 0.29 | ○ |

### (Characteristic Evaluation of Copper Alloy Powder for Additive Manufacturing)

According to Table 7, the copper alloy powders for additive manufacturing according to Examples 6 to 8 and Comparative Example 6 satisfied the above-described conditions for enabling additive manufacturing by an additive manufacturing apparatus. That is, each powder satisfied (1) the 50% particle size (D50 in Table 7) of powder particles and (2) the apparent density (AD in Table 7) of the powder, and also satisfied (3) the adhesion, although the flow rate (FR) of the powders could not be measured (none.) (Examples 6 to 8 and Comparative Example 6), and squeegeeing was possible.

Note that as for the content of each element of the manufactured copper alloy powders according to the Examples 6 to 8 and Comparative Example 6, a suitable wt% of each element was examined by setting wt% focusing on the contents of elements in existing copper alloy castings shown in Table 8.

**[Table 8]**

| | Corresponding copper and copper alloy casting (JIS H5120:2016) | | Cu | Al | Fe | Ni | Mn | Others |
|---|---|---|---|---|---|---|---|---|
| Example 6 | CAC 701 | aluminum bronze casting type 1 | 85.0 - 90.0 | 8.0 - 10.0 | 1.0 - 4.0 | 0.1 - 1.0 | 01-1.0 | 0.7 or less |
| Example 7 | CAC 702 | aluminum bronze casting type 2 | 80.0 - 88.0 | 8.0 - 10.5 | 2.5 - 5.0 | 1.0 - 3.0 | 0.1 - 1.5 | 0.7 or less |
| Example 8 | CAC 703 | aluminum bronze casting type 3 | 78.0 - 85.0 | 8.5 - 10.5 | 3.0 - 6.0 | 3.0 - 6.0 | 0.1 - 1.5 | 0.7 or less |
| Comparative Example 6 | CAC 704 | aluminum bronze casting type 4 | 71.0 - 84.0 | 6.0-9.0 | 2.0 - 5.0 | 1.0 - 4.0 | 7.0 - 15.0 | 0.7 or less |

### <Manufacturing of Additively Manufactured Product>

Using the copper alloy powder for additive manufacturing in each of Examples 6 to 8 and Comparative Example 6, with which squeegeeing was possible, an additively manufactured product was manufactured using a 3D additive manufacturing apparatus (powder sintering additive manufacturing/SLM: SLM280HL available from SLM Solutions). Note that as a sample of an additively manufactured product for characteristic measurement, an additively manufactured product with a rectangular parallelepiped shape having a width of 10 mm × a depth of 7 mm × a height of 5 mm was manufactured.

Using the copper alloy powder in each of Examples 6 to 8 and Comparative Example 6, an additively manufactured product was manufactured using an appropriate energy density (J/mm³). Table 9 shows the energy density (J/mm³). Note that for a copper alloy powder for additive manufacturing to which 9.0 wt% of an aluminum element, 3.5 wt% of an iron element, 2.5 wt% of a nickel element, and 11.0 wt% of a manganese element were added and in which cracks occurred at the time of additive manufacturing, an additively manufactured product was manufactured while changing the energy density (J/mm³) (see Comparative Examples 6-1 to 6-30).

**Table 9]**

| | Composition | | | | | Shaping conditions | | | | | Squeegeeing possibility | Shaping effect |
|---|---|---|---|---|---|---|---|---|---|---|---|---|
| | Element content (wt%) | | | | | LP | SS | HP | LT | ED | | |
| | Cu | Al | Fe | Ni | Mn | (W) | (mm/s) | (mm) | (mm) | (J/mm³) | | |
| Example 6 | Bal. | 8.5 | 3.0 | 0.5 | 0.1 | 300 | 1100 | 0.09 | 0.03 | 101.0 | ○ | ○ |
| Example 7 | Bal. | 10.5 | 3.1 | 2.0 | 1.1 | 250 | 1600 | 0.09 | 0.03 | 57.9 | ○ | ○ |
| Example 8 | Bal. | 10.0 | 5.0 | 5.0 | 0.7 | 300 | 1200 | 0.09 | 0.03 | 92.6 | ○ | ○ |
| Comparative Example 6 | Bal. | 9.0 | 3.5 | 2.5 | 11.0 | 175 - 275 | 1000 - 1750 | 0.09 | 0.03 | 37.0 - 101.9 | ○ | × |
| Comparative Example 6-1 | Bal. | 9.0 | 3.5 | 2.5 | 11.0 | 175 | 1000 | 0.09 | 0.03 | 64.8 | ○ | × |
| Comparative Example 6-2 | Bal. | 9.0 | 3.5 | 2.5 | 11.0 | 175 | 1500 | 0.09 | 0.03 | 43.2 | ○ | × |
| Comparative Example 6-3 | Bal. | 9.0 | 3.5 | 2.5 | 11.0 | 175 | 1300 | 0.09 | 0.03 | 49.9 | ○ | × |
| Comparative Example 6-4 | Bal. | 9.0 | 3.5 | 2.5 | 11.0 | 175 | 1450 | 0.09 | 0.03 | 44.7 | ○ | × |
| Comparative Example 6-5 | Bal. | 9.0 | 3.5 | 2.5 | 11.0 | 175 | 1600 | 0.09 | 0.03 | 40.5 | ○ | × |
| Comparative Example 6-6 | Bal. | 9.0 | 3.5 | 2.5 | 11.0 | 175 | 1750 | 0.09 | 0.03 | 37.0 | ○ | × |
| Comparative Example 6-7 | Bal. | 9.0 | 3.5 | 2.5 | 11.0 | 200 | 1000 | 0.09 | 0.03 | 74.1 | ○ | × |
| Comparative Example 6-8 | Bal. | 9.0 | 3.5 | 2.5 | 11.0 | 200 | 1500 | 0.09 | 0.03 | 49.4 | ○ | × |
| Comparative Example 6-9 | Bal. | 9.0 | 3.5 | 2.5 | 11.0 | 200 | 1300 | 0.09 | 0.03 | 57.0 | ○ | × |
| Comparative Example 6-10 | Bal. | 9.0 | 3.5 | 2.5 | 11.0 | 200 | 1450 | 0.09 | 0.03 | 51.1 | ○ | × |
| Comparative Example 6-11 | Bal. | 9.0 | 3.5 | 2.5 | 11.0 | 200 | 1600 | 0.09 | 0.03 | 46.3 | ○ | × |
| Comparative Example 6-12 | Bal. | 9.0 | 3.5 | 2.5 | 11.0 | 200 | 1750 | 0.09 | 0.03 | 42.3 | ○ | × |
| Comparative Example 6-13 | Bal. | 9.0 | 3.5 | 2.5 | 11.0 | 225 | 1000 | 0.09 | 0.03 | 83.3 | ○ | × |
| Comparative Example 6-14 | Bal. | 9.0 | 3.5 | 2.5 | 11.0 | 225 | 1500 | 0.09 | 0.03 | 55.6 | ○ | × |
| Comparative Example 6-15 | Bal. | 9.0 | 3.5 | 2.5 | 11.0 | 225 | 1300 | 0.09 | 0.03 | 64.1 | ○ | × |
| Comparative Example 6-16 | Bal. | 9.0 | 3.5 | 2.5 | 11.0 | 225 | 1450 | 0.09 | 0.03 | 57.5 | ○ | × |
| Comparative Example 6-17 | Bal. | 9.0 | 3.5 | 2.5 | 11.0 | 225 | 1600 | 0.09 | 0.03 | 52.1 | ○ | × |
| Comparative Example 6-18 | Bal. | 9.0 | 3.5 | 2.5 | 11.0 | 225 | 1750 | 0.09 | 0.03 | 47.6 | ○ | × |
| Comparative Example 6-19 | Bal. | 9.0 | 3.5 | 2.5 | 11.0 | 250 | 1000 | 0.09 | 0.03 | 92.6 | ○ | × |
| Comparative Example 6-20 | Bal. | 9.0 | 3.5 | 2.5 | 11.0 | 250 | 1500 | 0.09 | 0.03 | 61.7 | ○ | × |
| Comparative Example 6-21 | Bal. | 9.0 | 3.5 | 2.5 | 11.0 | 250 | 1300 | 0.09 | 0.03 | 71.2 | ○ | × |
| Comparative Example 6-22 | Bal. | 9.0 | 3.5 | 2.5 | 11.0 | 250 | 1450 | 0.09 | 0.03 | 63.9 | ○ | × |
| Comparative Example 6-23 | Bal. | 9.0 | 3.5 | 2.5 | 11.0 | 250 | 1600 | 0.09 | 0.03 | 57.9 | ○ | × |
| Comparative Example 6-24 | Bal. | 9.0 | 3.5 | 2.5 | 11.0 | 250 | 1750 | 0.09 | 0.03 | 52.9 | ○ | × |
| Comparative Example 6-25 | Bal. | 9.0 | 3.5 | 2.5 | 11.0 | 275 | 1000 | 0.09 | 0.03 | 101.9 | ○ | × |
| Comparative Example 6-26 | Bal. | 9.0 | 3.5 | 2.5 | 11.0 | 275 | 1500 | 0.09 | 0.03 | 67.9 | ○ | × |
| Comparative Example 6-27 | Bal. | 9.0 | 3.5 | 2.5 | 11.0 | 275 | 1300 | 0.09 | 0.03 | 78.3 | ○ | × |
| Comparative Example 6-28 | Bal. | 9.0 | 3.5 | 2.5 | 11.0 | 275 | 1450 | 0.09 | 0.03 | 70.2 | ○ | × |
| Comparative Example 6-29 | Bal. | 9.0 | 3.5 | 2.5 | 11.0 | 275 | 1600 | 0.09 | 0.03 | 63.7 | ○ | × |
| Comparative Example 6-30 | Bal. | 9.0 | 3.5 | 2.5 | 11.0 | 275 | 1750 | 0.09 | 0.03 | 58.2 | ○ | × |

As indicated by Comparative Examples 6-1 to 6-30 in Table 9, cracks occurred in each copper alloy powder for additive manufacturing to which 9.0 wt% of an aluminum element, 3.5 wt% of an iron element, 2.5 wt% of a nickel element, and 11.0 wt% of a manganese element were added even if the energy density was changed.

Table 10 shows the characteristics of the copper alloy additively manufactured products created using the copper alloy powders according to Examples 6 to 8 and Comparative Example 6, which were measured by the testing apparatuses shown in Table 3.

**[Table 10]**

| | Composition | | | | | Squeegeeing possibility | Production method | Additively manufactured product characteristics | | | | | | |
|---|---|---|---|---|---|---|---|---|---|---|---|---|---|---|
| | Element content (wt%) | | | | | | | Relative density % | Vickers hardness Hv | Maximum stress MPa | Elongation % | Proof stress MPa | Wear amount g | Electrical conductivity %IACS |
| | Cu | Al | Fe | Ni | Mn | | | | | | | | | |
| Example 6 | Bal. | 8.5 | 3.0 | 0.5 | 0.1 | ○ | AM | 99.9 | 204.8 | 650.01 | 40.0% | 358.70 | 0.0049 | 7.1% |
| Example 7 | Bal. | 10.5 | 3.1 | 2.0 | 1.1 | ○ | AM | 99.9 | 313.5 | 601.87 | 13.5% | 225.70 | 0.0034 | 6.2% |
| Example 8 | Bal. | 10.0 | 5.0 | 5.0 | 0.7 | ○ | AM | 99.8 | 444.9 | 1077.02 | 12.5% | 220.80 | 0.0029 | 4.1% |
| Comparative Example 6 | Bal. | 9.0 | 3.5 | 2.5 | 11.0 | ○ | AM | Shaping was impossible because of cracks at the time of shaping | | | | | | |

The relationship between the aluminum content of the copper alloy powder for additive manufacturing and the engineering stress and the proof stress of the copper alloy additively manufactured product was added to Fig. 5 based on the characteristic measurement result shown in Table 10 obtained in each of Examples 6 to 8. The relationship between the aluminum content of the copper alloy powder for additive manufacturing and the wear amount of the copper alloy additively manufactured product was added to Fig. 6 based on the characteristic measurement result shown in Table 10 obtained in each of Examples 6 to 8.

As can be seen from the measurement result of the characteristic of the copper alloy additively manufactured product shown in Table 10 and the graphs of Figs. 5 and 6, the mechanical strength of the copper alloy additively manufactured product additively manufactured from the copper alloy powder for additive manufacturing containing 7.0 wt% or more to 12.5 wt% or less of an aluminum element, 1.0 wt% or more to 6.0 wt% or less of an iron element, 0.1 wt% or more to 6.0 wt% or less of a nickel element, and 0.1 wt% or more to 1.5 wt% or less of a manganese element is very high. That is, a copper alloy additively manufactured product that satisfied a Vickers hardness of 150.0 Hv or more, an engineering stress (maximum stress) of 500 MPa or more, a proof stress of 180 MPa or more, and a wear amount of 0.01 g or less could be additively manufactured.

Furthermore, the corrosion resistance is excepted to be improved by adding the iron element, the nickel element, and the manganese element. In Example 6, even if the aluminum content is low, the engineering stress (maximum stress) and the proof stress increase, and the elongation is obtained. For example, compared to Example 4 in which the aluminum content is 10 wt%, the elongation can be improved without reducing the strength in Examples 7 and 8 with almost equal aluminum contents.

Thus, according to Examples 1 to 8, it is confirmed that a copper alloy powder for additive manufacturing, which can implement an excellent mechanical strength, and a copper alloy additively manufactured product having an excellent mechanical strength can be provided. It is also considered that performing a tempering treatment has an advantage for improving the characteristics, for example, improving the strength, and there is superiority as a manufacturing method.

### (Field of Application of Present Invention)

A copper alloy additively manufactured product according to the present invention can appropriately be used for components that need a particularly large mechanical strength (the Vickers hardness, the engineering stress, the proof stress, the wear amount, and the like), such as a bearing, a piston, a propeller for ship, and pumps.

This application is based upon and claims the benefit of priority from Japanese patent application No. 2022-077233, filed on May 9, 2022, the disclosure of which is incorporated herein in its entirety by reference.

## Claims

1. A copper alloy powder for additive manufacturing used to shape an additively manufactured product by an additive manufacturing method,
wherein the copper alloy powder for additive manufacturing contains not less than 1.3 wt% to not more than 12.5 wt% of an aluminum element, and a balance is formed by copper and unavoidable impurities.

2. The copper alloy powder for additive manufacturing according to claim 1, wherein the copper alloy powder for additive manufacturing contains not less than 7.0 wt% to not more than 12.5 wt% of the aluminum element, and the balance is formed by copper and unavoidable impurities.

3. The copper alloy powder for additive manufacturing according to claim 1 or 2, wherein a 50% particle size of the copper alloy powder for additive manufacturing is not less than 3 µm to not more than 200 µm.

4. The copper alloy powder for additive manufacturing according to claim 1 or 2, wherein an apparent density of the copper alloy powder for additive manufacturing measured by a measurement method of JIS Z 2504 is not less than 3.5 g/cm³.

5. The copper alloy powder for additive manufacturing according to claim 1 or 2, wherein an adhesion of the copper alloy powder for additive manufacturing obtained from a failure envelope obtained by a shearing test executed using a powder rheometer is not more than 0.600 kPa.

6. A manufacturing method of a copper alloy powder for additive manufacturing defined in claim 1, comprising:
generating a copper alloy powder formed by adding not less than 1.3 wt% to not more than 12.5 wt% of an aluminum element to copper by a gas atomization method; and
classifying the generated copper alloy powder into a particle size of not less than 10 µm to not more than 45 µm.

7. A copper alloy additively manufactured product additively manufactured by an additive manufacturing apparatus using a copper alloy powder for additive manufacturing defined in claim 1,
wherein the copper alloy additively manufactured product contains not less than 1.3 wt% to not more than 12.5 wt% of an aluminum element, and a balance is formed by copper and unavoidable impurities.

8. The copper alloy additively manufactured product according to claim 7, wherein a relative density is not less than 99.0%, a Vickers hardness is not less than 90 Hv, an engineering stress is not less than 260 MPa, a proof stress is not less than 160 MPa, and a wear amount is not more than 0.02 g.

9. A copper alloy additively manufactured product additively manufactured by an additive manufacturing apparatus using a copper alloy powder for additive manufacturing defined in claim 2,
wherein the copper alloy additively manufactured product contains not less than 7.0 wt% to not more than 12.5 wt% of an aluminum element, and a balance is formed by copper and unavoidable impurities, and
a relative density is not less than 99.0%, a Vickers hardness is not less than 150 Hv, an engineering stress is not less than 500 MPa, a proof stress is not less than 180 MPa, and a wear amount is not more than 0.01 g.

10. A manufacturing method of a copper alloy additively manufactured product, comprising:
manufacturing a copper alloy additively manufactured product by an additive manufacturing apparatus using a copper alloy powder for additive manufacturing defined in claim 1 or 2; and
holding the manufactured copper alloy additively manufactured product at not less than 400°C to not more than 600°C for 1 hr.

11. A copper alloy powder for additive manufacturing used to create an additively manufactured product by an additive manufacturing method,
wherein the copper alloy powder for additive manufacturing contains not less than 7.0 wt% to not more than 12.5 wt% of an aluminum element, not less than 1.0 wt% to not more than 6.0 wt% of an iron element, not less than 0.1 wt% to not more than 6.0 wt% of a nickel element, and not less than 0.1 wt% to not more than 1.5 wt% of a manganese element, and a balance is formed by copper and unavoidable impurities.

12. A manufacturing method of a copper alloy powder for additive manufacturing defined in claim 11, comprising:
generating a copper alloy powder formed by adding not less than 7.0 wt% to not more than 12.5 wt% of an aluminum element, not less than 1.0 wt% to not more than 6.0 wt% of an iron element, not less than 0.1 wt% to not more than 6.0 wt% of a nickel element, and not less than 0.1 wt% to not more than 1.5 wt% of a manganese element to copper by a gas atomization method; and
classifying the generated copper alloy powder into a particle size of not less than 10 µm to not more than 45 µm.

13. A copper alloy additively manufactured product additively manufactured by an additive manufacturing apparatus using a copper alloy powder for additive manufacturing defined in claim 11,
wherein the copper alloy additively manufactured product contains not less than 7.0 wt% to not more than 12.5 wt% of an aluminum element, not less than 1.0 wt% to not more than 6.0 wt% of an iron element, not less than 0.1 wt% to not more than 6.0 wt% of a nickel element, and not less than 0.1 wt% to not more than 1.5 wt% of a manganese element, and a balance is formed by copper and unavoidable impurities.

14. The copper alloy additively manufactured product according to claim 13, wherein a relative density is not less than 99.0%, a Vickers hardness is not less than 150 Hv, an engineering stress is not less than 500 MPa, a proof stress is not less than 180 MPa, and a wear amount is not more than 0.01 g.
